# EUROPEAN PATENT SPECIFICATION

(11) **EP 0 289 188 B1**
(45) Date of publication and mention of the grant of the patent: **14.07.1993**
(21) Application number: 88303482.9
(22) Date of filing: 18.04.1988
(51) Int. Cl.: B01D 36/00, F16K 51/00

(54) **Fluid filter drain assembly**
Abflussventil für Fluidum-Filter
Clapet de drainage pour filtre à fluide

(30) Priority: 24.04.1987 US 42081
(43) Date of publication of application: 02.11.1988
(73) Proprietor: PARKER HANNIFIN CORPORATION, Cleveland Ohio 44112 (US)
(72) Inventor: Church, John F., Modesto, CA 95350 (US); Neff, Steve A., Modesto, CA 95355 (US)
(74) Representative: Purvis, William Michael Cameron

(56) References cited:
- EP-A- 0 213 889
- EP-A- 0 260 069
- EP-A- 0 285 416
- DE-A- 3 327 437
- US-A- 2 810 398
- US-A- 4 624 779

## Description

The invention relates to a fluid filter, and more particularly, to a drain assembly whereby contaminants can be drained from a collection bowl of such a fluid filter.

One of the problems concerned with fluid filter assemblies, particularly for diesel engines is the removal of contaminants from the filter assembly which typically are collected in the bottom of a collection bowl and which may include not only water removed from the fuel, but solid particulate matter as well. These contaminants can foul the drain valves which are provided in the collection bowl for periodic maintenance purposes, which fouling often affects proper closure of the drain valve or results in the contaminants being retained in the filter assembly for possible re-entrance in the fluid being filtered. Another problem associated with assemblies of this kind is the difficulty in removing the contaminants from the collection bowl in that if a simple drain valve is employed, a partial vacuum is created in the fluid filter resulting in a difficult, if not impossible, drainage process.

Drain assemblies have been proposed which are self-venting, but these often have been complex and costly to construct. Some are constructed in such a manner that portions of the drain assembly might be completely unscrewed and the parts separated with possible loss of a component part. Further, on others there is a risk that the drain assembly might accidentally be left in its open position, with consequent loss of fuel. In many of these assemblies contamination near the drain or vent valve openings within the collection chamber, may tend to collect and prevent proper closing of the particular drain or vent valve.

One form of prior art drain assembly is shown in US-A-4 314 689 and includes a plug disposed in the internal passage which cooperates with a transverse bore in the drain valve in such a manner as to prevent contamination of the actuation device. This form of valve provides an efficient type of drain valve which is not so subject to clogging conditions.

Another form of drain valve assembly is shown in US-A-4 502 956 wherein the drain valve is designed to cooperate with first and second collection zones within the collection portion of the filter, which zones are walled off from one another and commonly relieved by the drain valve mechanism. In this arrangement one contaminant outlet is upstream of all of the filter media in the filter assembly and the second contaminant outlet is downstream of at least a portion of the filter media.

DE-A-3 327 437 discloses a single member threaded into a housing and having two seats thereon such that upon downward movement of the member, caused by unscrewing it, firstly a drain seat is opened to allow drainage from the housing and, upon further unscrewing, secondly a vent seat is opened to allow leakage of air into the housing at a position above the level of the first seat.

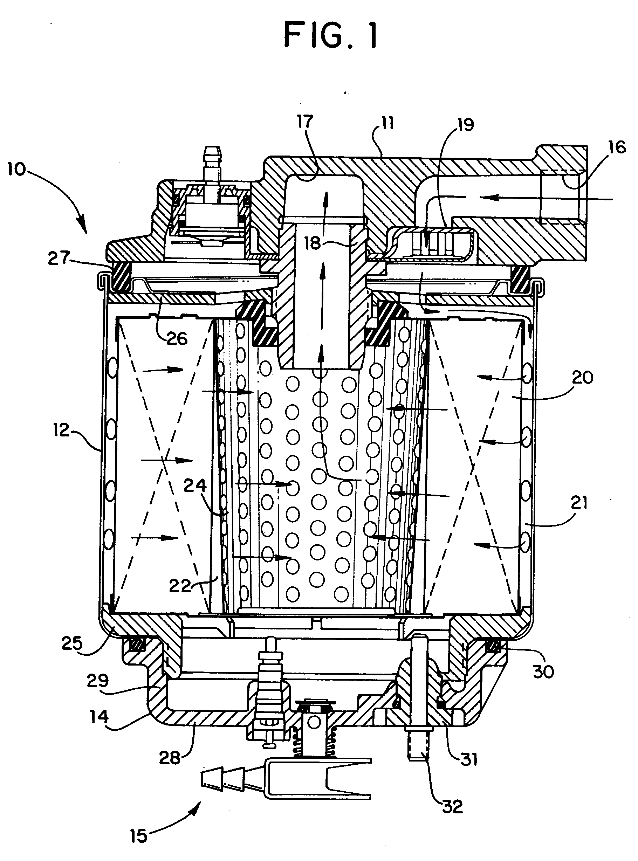

The specification of our EP-A-0 285 416 which has an earlier priority date than this application but was not published until after the priority date of this application describes a fluid filter and a drain assembly therefor generally as shown in Figures 1 to 5 of the drawings accompanying this application, these Figures not being part of the present invention.

According to the invention there is provided a drain assembly for a fluid filter comprising:-
a first valve operative to initiate drainage of a fluid chamber in which the valve is disposed, the first valve having a valve seat; being movable to control fluid flow through the first valve seat; and having a body stem threadedly engaged with the chamber bottom wall for vertical movement relative thereto, the body stem having an annular seal at the upper end thereof for movement with the body stem and for opening and closing engagement with the valve seat and the body stem having a central bore therein and an outlet located outside the chamber;
a second valve operative to open a vent to release a partial vacuum in the chamber as fluid is drained therefrom, and
means coupling the first and second valves for sequentially actuating the second valve in response to movement of the first valve as the first valve is moved between the open and closed positions;
characterised in that,
the first valve seat is disposed at a first location in the chamber, and the first valve has an open upper position and a closed lower position;
the second valve is also disposed in the fluid chamber, and has a valve seat disposed at a second location higher in vertical disposition than the first location and a valve seal disposed upon an actuating pin for movement therewith relative to the valve seat, the means engaging upon the valve pin;
the annular seal on the body stem of the first valve is within the chamber; and
a swivel connector is provided at the outlet of the body stem for coupling the body stem to a fluid discharge line.

The invention can thus provide a simplified drain valve assembly comprising a combination of individual drain and vent valves which are disposed in the bottom wall of the collection bowl of a fluid filter for diesel engine fuel, and which valves coact in their motion to provide a sequential initial opening of the drain valve and a later opening of the vent valve.

The drain valve and the vent valve can be disposed closely adjacent one another in the bottom wall of the contaminant collection bowl with the drain valve mounted in such a way that it can be rotated relative to the collection bowl and/or the cartridge in the fuel filter assembly and to provide a vertical motion for opening and closing the drain valve. The drain valve preferably includes an annular flange thereon which during its upward motion engages the actuating member of the vent valve to open the vent valve only after the drain valve has been initially opened. Preferably the vent valve is a spring loaded valve, biased to the closed position and mounted in such a disposition that the seat thereof is at a higher elevation than the seat of the drain valve. The vent valve can be a tyre core type valve commonly known in the trade as a Schrader type valve which is commonly employed for introducing air into vehicle tyres.

The invention is diagrammatically illustrated by way of example in the accompanying drawings, in which:-
Figure 1 is a sectional view of a fluid filter assembly including one form of a drain valve assembly of previously proposed kind located in the bottom wall of a collection bowl thereof;
Figure 2 is an elevational view of the collection bowl portion and drain valve assembly of Figure 1;
Figure 3 is a bottom view of the collection bowl and drain valve assembly of Figure 2;
Figure 4 is an enlarged elevational view partly in section of the drain valve assembly of Figure 1 shown in the closed condition;
Figure 5 is an enlarged elevational view partly in section of the drain valve assembly of Figure 1 shown in the open condition;
Figure 6 is an enlarged elevational view partly in section of an embodiment of drain valve assembly in accordance with the invention, shown in the closed condition;
Figure 7 is an enlarged elevational view partly in section of the drain valve assembly of Figure 6 shown in the open condition;
Figure 8 is an enlarged sectional view of a vent valve forming a part of the drain valve assemblies; and
Figure 9 is a plan view of the hose connector portion of a drain valve assembly removed from the remainder of the assembly.

Referring to the drawings, Figure 1 shows a typical fluid filter assembly 10 comprising a filter head 11, a filter cartridge 12, a collection bowl 14 and a drain assembly 15. The filter head 11 is conventionally mounted to the engine or other appropriate location in an engine compartment and comprises an inlet port 16 and outlet port 17 and includes a central threaded connector tube 18 in fluid communication with the outlet port 17. A heater element 19 may be included in the filter head 11 to heat diesel fuel and the like prior to filtration of same, but the details of the heater are not essential to an understanding of the invention.

The filter cartridge 12 is a cylindrical casing containing an annular filter medium 20 separating the cartridge into a peripheral fuel zone 21 and a central fuel chamber 22 and may also include a perforated support tube 24 in the central fuel chamber 22. An adapter ring 25 is included in the lower portion of the filter cartridge 12 being externally threaded on a lower tubular portion thereof for receipt of the collection bowl 14. The cartridge 12 includes a rigid upper wall 26 which is threadedly received on the connector tube 18 and which allows ready replacement of the cartridge 12 for service and maintenance purposes. An annular seal 27 is included at the top of the cartridge 12 for sealing engagement with the filter head 11 and to establish closed fluid communication paths between the fuel chambers 21, 22 in the cartridge 12 and the inlet and outlet ports 16, 17.

The collection bowl 14 is a cup-shaped member having a bottom wall 28 and a peripheral side wall 29. The side wall 29 is internally threaded and received on the threaded portion of the adapter ring 25 for securement and separation from the cartridge 12. A typical o-ring seal 30 provides a fluid tight connection between the collection bowl 14 and the cartridge 12.

It will be understood that fuel to be filtered enters the filter head 11 at the inlet port 16 and is directed by way of the heater element 19 to the outer peripheral chamber 21, to flow through the filter medium 20, the central peripheral chamber 22 and by way of the connector tube 18 to the outlet port 17. Water and other contaminants which tend to collect on the outer periphery of the filter medium 20 will drop to the lower portion of the peripheral fuel chamber 21 and pass through radial channels in the adapter ring 25 to be deposited in the bottom of the collection bowl 14. The collection bowl 14 further includes in the bottom wall 28 thereof a water sensor element 31 which can detect the presence of water at a determined level in the collection bowl 14 to provide a signal that such contaminants should be removed therefrom. Such a water sensor essentially comprises a conductive rod 32 which passes through an insulated sleeve of the water sensor and thus through the bottom wall of the collection bowl 14 to be contacted by the water therein.

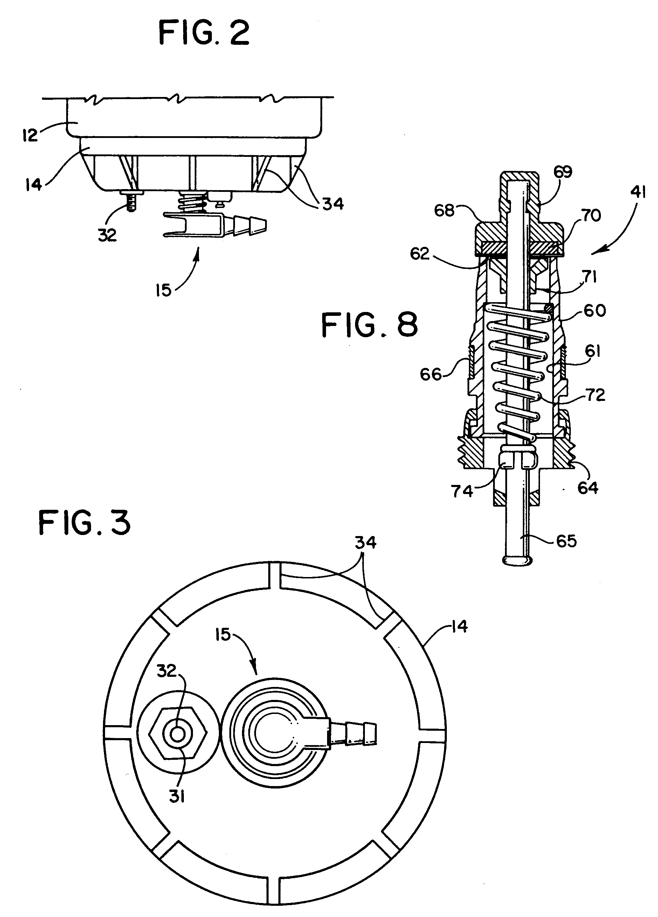

The circular configuration of the collection bowl 14 may be seen more clearly in the elevation and bottom views of Figures 2 and 3 respectively which also include views of the water sensor 31 and the drain valve assembly 15. The collection bowl 14 preferably includes a plurality of ridges 34 distributed about its periphery to assist in gripping and twisting of the collection bowl 14 relative to the cartridge 12 for removal and replacement purposes.

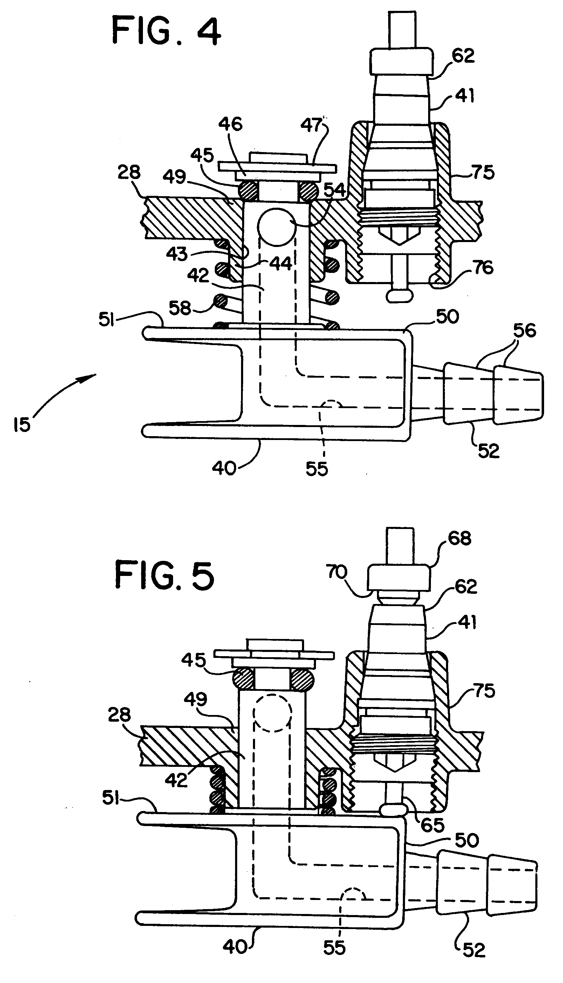

One form of drain valve is shown more clearly in the enlarged views of Figure 4 and 5 as comprising a drain valve 40 and a vent valve 41 mounted closely adjacent one another in the bottom wall 28 of the collection bowl 14. The drain valve 40 comprises a cylindrical valve stem 42 slidably and rotatably mounted in a bore 43 formed in the bottom wall 28 and a downwardly protruding hub portion 44 for further support. The inner end of the valve stem 42 is reduced and receives an o-ring seal 45 which is further held in place by means of a washer 46 and a snap ring 47 so that the o-ring seal 45 is supported for movement with the valve stem 42. The inner end of the bore 43 at the junction of the inner surface of the bottom wall 28 forms an annular valve seat 49 through which the valve stem 42 extends and against which the o-ring seal 45 engages for opening and closing of the drain valve 40.

At the lower portion of the valve stem 42 and integral therewith is an annular flange 50 which is a generally circular member which extends transversely sufficiently far to underlie the vent valve 41 and which includes a shoulder 51 as the upper surface portion thereof and a transversely extending hose connector 52. The annular flange 50 serves to couple the drain valve 40 and the vent valve 41 for common actuation.

A cross bore 54 is included in the upper portion of the valve stem 42 just below the location of the o-ring seal 45 and which communicates by way of a right angle bore in the stem 42 and the flange 50 with the hose connector 52. The hose connector 52 has a plurality of barbs 56 thereon and comprises a push-on connector or coupling for hose or tubing which can direct contaminants away from the drain assembly 15 to a remote location. A coil spring 58 is disposed over the hub 44 and acts between the bottom wall 28 and the shoulder 51 of the annular flange 50 to urge the drain valve 40 to the normally closed condition depicted in Figure 4.

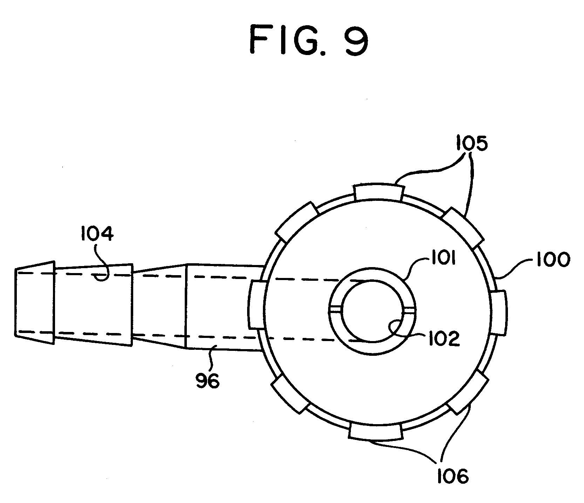

The vent valve 41 is shown in more detail in the cross sectional view of Figure 8 as comprising a tubular, typically brass, body plug 60 having a central bore 61 therein terminating at one end in an annular valve seat 62 and closed at the other end by an externally threaded plug member 64. The plug member 64 is securely clenched to the body member 60 and slidably receives a valve pin 65. The body plug 60 includes a sleeve seal 66 at a mid portion of its periphery to provide sealing engagement with the bore in which the vent valve 41 is located. At its upper end, the vent valve 41 includes a plunger cup 68 which is also clenched as at 69 to the valve pin 65 for movement therewith, the plunger cup 68 receiving an annular plunger washer 70. The plunger washer 70 is further retained in place by a ferrule 71 secured to the valve pin 65, all of which move with the valve pin 65 as an assembly. A conical compression spring 72 is positioned between an internal shoulder in the body plug 60 and a further ferrule 74 clenched to the valve pin 65 and urges the valve pin 65 in a downward direction thereby to urge the plunger washer 70 into engagement with the valve seat 62 to provide a normally closed condition for the vent valve 41.

Referring more particularly to Figure 5, it may be seen that the vent valve 41 is positioned in a boss 75 in the bottom wall 28 of the collection bowl 14, which boss 75 has a partly threaded interior bore 76 to place the valve seat 62 of the vent valve 41 at a higher elevation in the collection bowl 14 than the valve seat 49 of the drain valve 40. When the drain valve 40 is actuated by manual elevation of the annular flange 50, the o-ring seal 45 will be elevated from the valve seat 49 to allow initial flow of liquid and contaminants in the collection bowl 14 through the cross bore 54, the right angle bore 55 and outwardly of hose connector 52. During this initial priming phase a partial vacuum will be drawn in the collection bowl 14, the cartridge 12 and a part of the filter head 11 preventing or interfering with drainage of fluid through the outlet bore 55. As the drain valve 40 is further elevated, the shoulder 51 of the annular flange 50 will engage the valve pin 65 of the vent valve 41 to cause opening of the vent valve 41. As depicted in Figure 5 in the fully open position, the annular flange 50 has been fully elevated into contact with the boss 44 thereby fully compressing the spring 58 and elevating the valve pin 65 against the bias of the compression spring 72 to raise the plunger cup 68 and the plunger washer 70 contained therein to a position spaced from the valve seat 62. In this condition a path for entry of air into the collection bowl 14 is provided by way of the bore in the lower plug member 64, the bore 61 of the body plug 60 and the valve seat 62. Replacement of air within the collection bowl 14 will allow complete drainage of the fluid and contaminants contained therein through the outlet bore 55 of the drain valve 40.

It will be noted that the transverse extent of the annular flange 50 of the drain valve 40 is sufficient for a portion of the shoulder 51 to underlie the valve pin 65 no matter what the angular orientation of the drain valve 40 with respect to the collection bowl 14. It is also apparent that the drain valve 40 may be held in a stationary position as when connected to a drainage hose or the like so that the collection bowl 14 and/or the cartridge 12 may be unthreaded from one another or from the filter head 11 for replacement or maintenance purposes without removing the hose. In all angular orientations the cooperation between the drain valve 40 and the vent valve 41 is maintained. It will be further apparent that when upward pressure is released from the drain valve 40, the drain valve 40 will be urged to its normally closed position by the return spring 58 and that the vent valve 41 will similarly be returned to its normally closed condition by the internal conical spring 72 until the respective positions depicted in Figure 4 are attained. It will still further be apparent that the annular flange 50 of the drain valve 40 provides a protective shield over the valve pin 65 to prevent inadvertent actuation of the valve pin 65 other than when the drain valve 40 is intentionally being actuated. Still further, it will be clear that both the drain valve 40 and the vent valve 41 have a self cleaning characteristic for contaminants which may be located about the respective valve seats 49, 62. Thus, as the valve stem 42 is raised and lowered relative to the bottom wall 28, a scraping action will occur at the valve seat 49 tending to clear contaminants thereat with the cross bore 54 normally being protected from contamination by being disposed in the bore 43 below the normally closed valve seat 49. Similarly, in the vent valve 41 when the plunger washer 70 is elevated above the vent valve seat 62 and air flows through the central bore 61, the inrush of air will tend to clear contaminants from the valve seat 62 so that closing of the vent valve 41 will not be impeded.

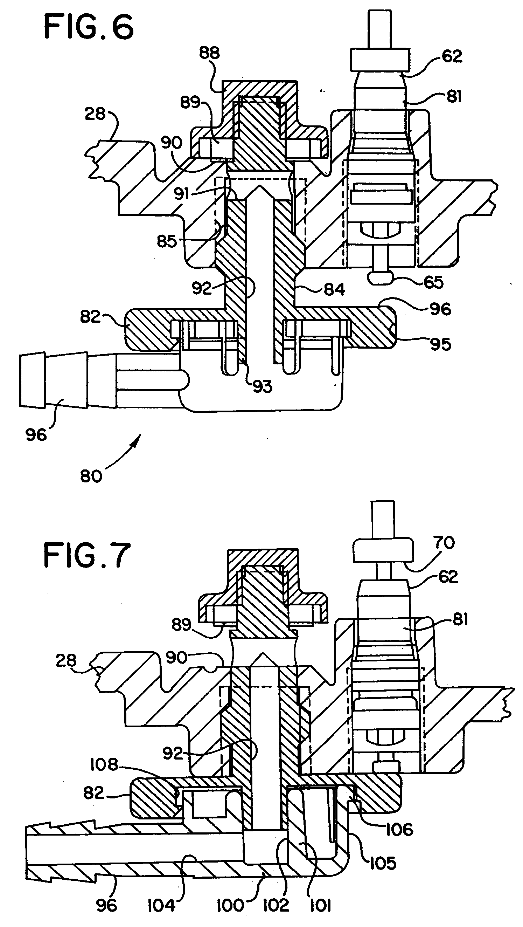

While the valves depicted in Figures 4 and 5 provide a simplified structure and easily actuatable drain valve assembly, it is desired to have a more secure configuration of drain valve structure which can be forceably retained in its full open and full closed conditions and which is not subject to inadvertent opening thereof. For this reason the drain valve assembly 80 depicted in Figures 6 and 7 is provided. The drain valve assembly 80 comprises a vent valve 81 identical to the vent valve 41 and a drain valve 82 similar to the drain valve 40. The drain valve 82 comprises an externally threaded cylindrical body member 84 received in a threaded bore 85 in the bottom wall 28 of the collection bowl 14. The drain valve body member 84 includes a threaded cap 88 at its upper end which houses and retains an annular seal 89 for movement with the body member 84 into engagement with an annular valve seat 90 formed in the inner surface of the bottom wall 28, again at an elevation substantially below that of the valve seat 62 of the vent valve 81. The body member 84 includes a cross bore 91 at the upper portion thereof below the valve seat 89 which is in communication with a central bore 92 terminating at a boss 93 at the lower end thereof. The body member 84 further includes an integral annular flange 95 at the lower end thereof similar to the flange 50 of the drain valve 40, being of generally circular configuration and having an upper circular surface forming a shoulder 96 for engagement with the valve pin 65 of the vent valve 81.

It will be apparent then as the annular flange 95 of the drain valve 80 is rotated from the position depicted in Figure 6, the valve seal 89 will be initially lifted from the valve seat 90 to allow fluid communication to the cross bore 91 and the central bore 92 and an initial priming of the chamber formed by the collection bowl 14. Upon continued upward movement, the shoulder 96 of the annular flange 95 will engage the valve pin 65 to move the vent valve seal 70 to a position separated from the vent valve seat 62 allowing the entrance of air through the valve 81 in a manner similar to that previously described. The fully open position of the drain valve assembly 80 is shown in Figure 7. Similarly, when the annular flange 95 is threaded in the opposite direction to return the drain valve 80 to its lowermost position as depicted in Figure 6, the valve seal 89 may be urged into tight and secure engagement with the valve seat 90 to provide a secure closure of the drain valve 80. During this downward movement, the vent valve 81 will be returned to its normally closed condition by the internal compression spring 72 in a manner similar to that previously described.

The drain valve 80 further includes a hose connector 98, again including a laterally extending barb-type coupling, and a swivel connection between hose connector 98 and the annular flange 95. As shown more clearly in Figure 9, the hose connector 98 comprises a circular body member 100 having a central upstanding boss 1 with a central bore 102 therein in communication with a coupling bore 104 passing through the barbed coupling portion of the hose connector 98. The hose connector 98 further includes a plurality of circumferentially spaced upstanding flanges 105 surrounding the boss 1, each flange 105 having a laterally extending barb 106 at the upper tip thereof to be received in an annular groove 108 formed in the bottom of the annular flange 95 in a slidable, snap fit, swivel connection therein. The hose connector 98 is preferably an injection moulded plastics member allowing some degree of resilience to the flanges 105 to allow them to be pressed into the groove 108 and to be retained therein. As the hose connector 98 is placed on the lower portion of the body member 84, the boss 93 will be received in the bore 102 of the boss 1 in a press-fit engagement to provide a fluid tight interconnection therebetween, even though the hose connector 98 may be rotated relative to the annular flange 95. Thus, it may be seen that the hose connector 98 may be retained in a stable axial position, connected to hose or tubing, while the annular flange 95 is threaded relative to the bottom wall 28 or while the collection bowl 14 is rotated relative to the cartridge 12 as well as when the cartridge 12 is rotated relative to the fluid head 11 when being removed for replacement and maintenance purposes.

It may also be seen that a self cleansing action of the drain valve 80 is achieved when the valve stem 84 is elevated and that the cross bore 91 is protected within the bore 85 beneath the valve seal 89 and the valve seat 90 in a manner similar to that previously described with respect to the drain valve 40.

## Claims

1. A drain assembly (80) for a fluid filter comprising:-
a first valve (82) operative to initiate drainage of a fluid chamber (14) in which the valve is disposed, the first valve (82) having a valve seat (90); being movable to control fluid flow through the first valve seat; and having a body stem (84) threadedly engaged with the chamber bottom wall (28) for vertical movement relative thereto, the body stem (84) having an annular seal (89) at the upper end thereof for movement with the body stem (84) and for opening and closing engagement with the valve seat (90) and the body stem (84) having a central bore (92) therein and an outlet (93) located outside the chamber (14);
a second valve (81) operative to open a vent to release a partial vacuum in the chamber as fluid is drained therefrom, and
means (51,96) coupling the first and second valves for sequentially actuating the second valve in response to movement of the first valve as the first valve is moved between the open and closed positions;
characterised in that,
the first valve seat (90) is disposed at a first location in the chamber (14), and the first valve (82) has an open upper position and a closed lower position;
the second valve (81) is also disposed in the fluid chamber (14), and has a valve seat (62) disposed at a second location higher in vertical disposition than the first location and a valve seal (70) disposed on an actuating pin (65) for movement therewith relative to the valve seat (62), the means 51,96 engaging upon the valve pin (65);
the annular seal (89) on the body stem (84) of the first valve is within the chamber (14); and
a swivel connector (95) is provided at the outlet of the body stem (84) for coupling the body stem (84) to a fluid discharge line.

## Patentansprüche

1. Ablaßanordnung (80) für ein Fluidfilter, mit
einem ersten Ventil (82), das betätigt wird, um das Entleeren einer Fluidkammer (14) einzuleiten, in der sich das Ventil befindet, wobei das erste Ventil (82) einen Ventilsitz (90) umfaßt, bewegt werden kann, um den Fluidstrom durch den Sitz des ersten Ventils zu steuern, und eine Spindel (84) aufweist, die über ein Gewinde mit der Bodenwandung (28) der Kammer so in Eingriff steht, daß sie relativ dazu vertikal bewegt werden kann, wobei die Spindel (84) an ihrem oberen Ende eine ringförmige Dichtung (89) zur Bewegung mit der Spindel (84) und zum Ineingriffkommen mit dem Ventilsitz (90) zum Öffnen und Schließen aufweist, und wobei die Spindel (84) in sich eine zentrale Bohrung (92) sowie auch eine Austrittsöffnung (93) aufweist, die sich außerhalb der Kammer (14) befindet,
einem zweiten Ventil (81), das betätigt wird, um eine Entlüftungsöffnung zu öffnen, damit ein Unterdruck in der Kammer abgegeben wird, wenn daraus Fluid abgelassen wird, und
mit Mitteln (51, 96, 65), die die ersten und zweiten Ventile koppeln, um das zweite Ventil sequentiell in Reaktion auf die Bewegung des ersten Ventils zu betätigen, wenn das erste Ventil zwischen den offenen und geschlossenen Positionen bewegt wird,
dadurch gekennzeichnet,
daß sich der erste Ventilsitz (90) in einer ersten Position in der Kammer (14) befindet, und daß das erste Ventil (82) eine offene obere Position und eine geschlossene untere Position aufweist,
daß sich das zweite Ventil (81) ebenfalls in der Fluidkammer (14) befindet und einen Ventilsitz (62), der sich in einer zweiten Position befindet, die in der vertikalen Anordnung höher liegt als die erste Position, und eine Ventildichtung (70) aufweist, die sich auf einem Betätigungsstift (65) zur Bewegung damit relativ zu dem Ventilsitz (62) befindet, wobei die Mittel (51, 96) auf dem Ventilstift (65) in Eingriff kommen,
daß sich die ringförmige Dichtung (89) der Spindel (84) des ersten Ventils in der Kammer (14) befindet, und
daß ein Schwenkverbindungselement (95) an der Austrittsöffnung der Spindel (84) vorgesehen ist, um die Spindel (84) mit einer Fluidablaufleitung zu verbinden.

## Revendications

1. Clapet de drainage (80) pour filtre à fluide, comprenant :
- une première soupape (82) servant à déclencher le drainage d'une chambre à fluide (14) dans laquelle est montée la soupape, la première soupape (82) comportant un siège de soupape (90), pouvant se déplacer pour commander le débit de fluide à travers le premier siège de soupape, et comportant une tige de corps (84) se vissant dans la paroi de fond (28) de la chambre pour se déplacer verticalement par rapport à celle-ci, la tige de corps (84) comportant à son extrémité supérieure un joint d'étanchéité annulaire (89) destiné à se déplacer avec la tige de corps (84) et à former un engagement d'ouverture et de fermeture avec le siège de soupape (90), et la tige de corps (84) comportant dans celle-ci un alésage central (92) et un orifice de sortie (93) placé à l'extérieur de la chambre (14) ;
- une seconde soupape (81) servant à ouvrir un évent pour libérer un vide partiel dans la chambre lorsque le fluide est drainé de celle-ci, et
- des moyens (51, 96) d'accouplement de la première soupape à la seconde soupape pour actionner séquentiellement la seconde soupape en réponse au mouvement de la première soupape lorsqu'on déplace cette première soupape entre sa position d'ouverture et sa position de fermeture ;
clapet de drainage caractérisé en ce que :
- le premier siège de soupape (90) est disposé à un premier endroit dans la chambre (14), et la première soupape (82) présente une position supérieure d'ouverture et une position inférieure de fermeture ;
- la seconde soupape (81) est également disposée dans la chambre à fluide (14) et comporte un siège de soupape (62) disposé à un second endroit verticalement plus haut que le premier endroit, ainsi qu'un joint d'étanchéité de soupape (70) disposé sur une tige de manoeuvre (65) pour se déplacer avec celle-ci par rapport au siège de soupape (62), les moyens d'accouplement (51, 96) s'engageant sur la tige de soupape (65) ;
- un joint d'étanchéité annulaire (89) se trouvant sur la tige de corps (84) de la première soupape est placé à l'intérieur de la chambre (14) ; et
- un connecteur pivotant (95) est utilisé à la sortie de la tige de corps (84) pour accoupler cette tige de corps (84) à une conduite de déchargement de fluide.
